# EUROPÄISCHE PATENTANMELDUNG

(11) **EP 1 598 659 A1**
(43) Veröffentlichungstag der Anmeldung: **23.11.2005**
(21) Anmeldenummer: 05010148.4
(22) Anmeldetag: 10.05.2005
(51) Int. Cl.: G01N 21/77, C12N 5/00, G01N 33/543, B01L 3/00

(54) **Vorrichtung zur in-vivo Charakterisierung von Zellen und ihre Verwendung**

(30) Priorität: 21.05.2004 DE 102004024977
(71) Anmelder: Forschungszentrum Karlsruhe GmbH, 76133 Karlsruhe (DE)
(72) Erfinder: Rabus, Dominik, Dr., 76137 Karlsruhe (DE); Henzi, Patric, Dr., 76137 Karlsruhe (DE); Welle, Alexander, Dr., 68723 Schwetzingen (DE)
(74) Vertreter: Rückert, Friedrich

(57) **Zusammenfassung**

Die Erfindung betrifft eine Vorrichtung zur in-vivo Charakterisierung von Zellen aus einer Zellkultur, enthaltend eine Lichtquelle zur Erzeugung eines Anregungslichts, ein erstes Koppelelement zum Einkoppeln des Anregungslichts in den mindestens einen Lichtwellenleiter, der in eine Oberfläche eines Kunststoffs eingebracht ist, ein zweites Koppelelement zum Auskoppeln des in mindestens einem der Lichtwellenleiter modifizierten Anregungslichts aus dem mindestens einen Lichtwellenleiter zur Beaufschlagung eines lichtsensitiven Detektor zum Nachweis des in mindestens einem Lichtwellenleiter modifizierten Anregungslichts, die durch partielle Bestrahlung der Oberfläche des Kunststoffs mit ionisierender Strahlung erhältlich ist, wodurch Veränderungen in den bestrahlten Bereichen des Kunststoffs hervorgerufen werden, die dadurch sowohl als Lichtwellenleiter als auch für das Anlegen der Zellkultur einsetzbar sind.

Eine erfindungsgemäße Vorrichtung dient zur Charakterisierung von Zellen, als Biosensor oder als Bioreaktor.

## Beschreibung

Die Erfindung betrifft eine Vorrichtung zur in-vivo Charakterisierung von Zellen aus einer Zellkultur und ihre Verwendung.

Die in-vivo Charakterisierung von Zellen ermöglicht es, intrazelluläre Vorgänge, wie sie zum Beispiel bei der Exposition tierischer oder humaner Zellen gegenüber potentiellen pharmazeutischen Wirkstoffen, Toxinen oder anderen umweltrelevanten Stoffen auftreten, nicht-invasiv zu erfassen. Damit lassen sich sowohl krankheitsspezifische Vorgänge *in vitro* simulieren und untersuchen, als auch Substanzbibliotheken im sog. *drug screening* auf ihre potentielle pharmazeutische Anwendbarkeit prüfen. Ein weiterer Einsatzbereich ist die Umweltanalytik.

Insbesondere im Hinblick auf aktuelle Forschungsschwerpunkte in der Pharmaindustrie, die in den Bereichen Entzündung (Rheuma), Krebsbekämpfung, Herz/Kreislauf-Erkrankungen, Aids, Apoptose (programmierter Zelltod) und Blutgerinnung liegen, ist die Entwicklung und Erprobung entsprechender neuer Wirkstoffe und Medikamente mit Hilfe eines Zellkultursystems unabdingbar, das in der Weise konzipiert ist, dass die Substanz- und Wirkungstestung unter in-vivo-Bedingungen, d. h. mit Abbildung komplexer biologischer Systeme vor Übertritt in die klinischen Phasen (Testung an Probanten) ermöglicht wird.

Mit Rücksicht hierauf besteht die Forderung nach einer Möglichkeit der Simulation von Reaktionsabläufen innerhalb eines oder mehrerer Organsysteme (z. B. durch Serienschaltung von Zellkulturkammern zur Untersuchung auf Abbauprodukte und Metabolite, mit Hepatozyten und anderen Zellarten), damit zum einen die Zeiträume zwischen Substanzwirkungserkennung und Arzneimittelzulassung erheblich minimiert werden und zum anderen vor dem Eintritt in die klinische Testphase die notwendigen Erkenntnisse über den Wirkungsmechanismus der Substanz innerhalb eines komplexen biologischen Systems erlangt werden können. Vergleichbare Untersuchungsauflagen liegen auch im Bereich der Kosmetik, Pflanzenschutz und Umweltindustrie vor.

Aus der US 5 324 591 A ist bekannt, Zellen selektiv auf photolithographisch hergestellten ultradünnen Filmen aufwachsen zu lassen. Hierfür ist jedoch eine Beschichtung des Glassubstrats mit einem hierauf aufzubringenden Zellhaftungspromoter erforderlich. Weiterhin offenbart diese Schrift einen Mikrosensor, in dem sich in ausreichender Nähe zu einem Bereich, der mit einem Zellhaftungspromoter beschichtet ist, ein so genannter *Transducer* wie zum Beispiel eine Mikroelektrode, eine Photodiode oder eine faseroptische Vorrichtung befindet.

Sowohl die US 5 593 814 A als auch die DE 101 12 109 A1 offenbaren Verfahren zur UV induzierten selektiven Zelladhäsion auf einem Substrat, das einen photosensitiven Kunststoff umfasst. Die auf der Oberfläche eines derartigen Kunststoffs aufgebrachten Zellen werden zur Zellkultivierung eingesetzt oder sollen als Biosensor dienen, ohne dass ersichtlich ist, über welche physikalischen Mechanismen die Sensoreigenschaften nutzbar gemacht werden.

Aus der DE 41 28 846 A1 ist ein Stoffsensor zur quantitativen Erfassung von biologischen Stoffen in Gasen, Flüssigkeiten und Feststoffen bekannt. Hierzu wird ein in ein Glassubstrat eingebrachter Lichtwellenleiter mit einer Schicht versehen, die bei der Wechselwirkung mit den nachzuweisenden Stoffen oder mit deren Reaktionsprodukten ihre optischen Eigenschaften derart ändert, dass durch das evaneszente Feld der im Wellenleiter geführten Lichtwelle die Transmission des Wellenleiters beeinflusst wird. Um Zellen in-vivo charakterisieren zu können, ist eine für die jeweilige Zellkultur geeignete Schicht auf dem Glassubstrat erforderlich.

Davon ausgehend ist es die Aufgabe der Erfindung, eine Vorrichtung zur in-vivo Charakterisierung von Zellen und ihre Verwendung anzugeben, die die genannten Nachteile und Einschränkungen nicht aufweist. Insbesondere soll eine Vorrichtung bereitgestellt werden, die unabhängig von der Art der Zellen die nicht-invasive Charakterisierung bereits einer kleinen Zahl an Zellen bei geringem Verbrauch an hierauf aufgebrachten Substanzen wie Wirkstoffen, Toxinen oder anderen umweltrelevanten Stoffen ermöglicht. Weiterhin hat die vorliegende Erfindung zur Aufgabe, eine zur Aufnahme wenigstens einer Zellkultur dienenden Zellkulturkammer für ein geschlossenes oder offenes Zellkultursystem bereit zu stellen, wobei eine kontinuierliche Versorgung insbesondere der Zellen mit Substanzen wie flüssigem Nährmedium, Wachstumsfaktoren oder Gasen in der Zellkulturkammer gewährleistet ist, ohne dass die Zellen ihrer gewohnten Umgebung entnommen werden müssen und gleichzeitig eine permanente Beobachtung der Zellkulturen ohne Unterbrechung der Zu- oder Ableitung der Substanzen möglich ist.

Diese Aufgabe wird in Bezug auf die Vorrichtung durch die Merkmale des Anspruchs 1 und in Bezug auf die Verwendung durch die Ansprüche 14 bis 16 gelöst. Die Unteransprüche beschreiben jeweils vorteilhafte Ausgestaltungen der Erfindung.

Eine erfindungsgemäße Vorrichtung zur in-vivo Charakterisierung von Zellen aus einer Zellkultur umfasst eine Lichtquelle (breitbandig wie z. B. eine Halogenlampe oder schmalbandig wie z. B. eine Laserdiode), ein erstes Koppelelement (Einkoppelelement), das das Licht aus der Lichtquelle in mindestens einen Lichtwellenleiter, der in eine Oberfläche aus einem Kunststoff eingebracht ist, einkoppelt, ein zweites Koppelelement (Auskoppelelement), das das Licht, das in mindestens einem der Lichtwellenleiter durch die Zellen, die auf die Oberfläche des Kunststoffs aufgebracht wurden, modifiziert wurde, auskoppelt und auf einen lichtsensitiven Detektor leitet, der das Licht in ein elektrisches Signal umwandelt.

Eine erfindungsgemäße Vorrichtung ist durch partielle Bestrahlung der Oberfläche des Kunststoffs mit ionisierender Strahlung wie z. B. ultraviolettem Licht erhältlich, wobei die so bestrahlte Oberfläche gleichzeitig sowohl zur Ausformung der Lichtwellenleiter als auch zum Anlegen der Zellkultur dient. In einer besonderen Ausgestaltung ist der Kunststoff auf einer Trägerstruktur aus einem anderen Material aufgebracht.

In einer besonderen Ausgestaltung dient die Oberfläche des Kunststoffs, die die Lichtwellenleiter tragen, nicht direkt für die Zelladhädion bzw. -immobilisierung, sondern wird als Träger genutzt, um hierauf zusätzlich eine sehr dünne Schicht, deren Dicke zwischen 10 nm und 1 µm, bevorzugt zwischen 100 nm und 500 nm beträgt, aufzubringen. Diese Schicht kann aus demselben oder einem andern Kunststoff, der in einem zweiten Prozessschritt partiell (lokal) durch ionisierende Strahlung wie z. B. ultraviolettes Licht für die Zelladhäsion strukturiert wird. Der Vorteil dieser Ausgestaltung liegt darin, dass hierdurch Wellenleiterherstellung und Zelladhäsion entkoppelt sind und daher beliebige Prozessparameter und unterschiedliche Geometrien für Wellenleiter und Zellimmobilisierung gewählt werden können.

Eine erfindungsgemäße Vorrichtung basiert auf der partiellen (lokalen) Veränderung des Brechungsindex' von Kunststoffen wie zum Beispiel Polymethylmethacrylat (PMMA), Polycarbonat oder Polystyrol durch ionisierende Strahlung. Im Falle von PMMA wird hierfür ultraviolettes Licht einer bevorzugten Wellenlänge zwischen 220 nm bis 260 nm eingesetzt. Die Strahlung ruft, wie aus der DE 44 24 236 A1 bekannt ist, strukturelle Veränderungen in den bestrahlten Bereichen des Kunststoffs hervor, die dann als Wellenleiter eingesetzt werden können.

Für die lokale Strukturierung von Wellenleitern wird bevorzugt eine der beiden im Folgenden beschriebenen Ausgestaltungen eingesetzt. In der einen Ausgestaltung erfolgt die laterale Strukturierung der Wellenleiter über herkömmliche Photolithographie mittels einer Chrom-/Quarzmaske. Als Substrat dienen aufgeschleuderte dünne Filme aus PMMA auf einem niederbrechenden Träger.

In der anderen Ausgestaltung werden Halbzeuge in Form von Platten eingesetzt, deren Oberfläche planarisiert und poliert wurde. Aufgrund der geringen Eindringtiefe der UV-Strahlung von nur wenigen Mikrometern kann der Wellenleiter direkt in die Oberfläche des Kunststoffs eingeschrieben werden. Durch Kombination mit der LIGA-Technik wird das Polymer vorstrukturiert, um es durch eine Rippen- oder Grubenstruktur für die anschließende planare UV-Bestrahlung zu maskieren. Dieses Verfahren vermeidet thermische Verzüge aufgrund unterschiedlicher thermischer Ausdehnungskoeffizienten von PMMA-Film und Träger.

In einer bevorzugten Ausgestaltung sind erfindungsgemäße Vorrichtungen dadurch erhältlich, dass die partielle Bestrahlung der Oberfläche des Kunststoffs mit ultraviolettem Licht unter Sauerstoffabschluss (im Vakuum oder unter Inertgas wie Argon) stattfindet. Wie gezeigt werden konnte, hat die An- bzw. Abwesenheit von Sauerstoff einen erheblichen Einfluss auf die Beständigkeit der Wellenleiter gegenüber polaren Lösungsmitteln, was in erster Linie wässrige Lösungen und damit biophotonische Anwendungen betrifft: Unter Vakuum oder Inertgas hergestellte Wellenleiter sind wesentlich resistenter gegenüber polaren Lösungsmitteln und zeigen aufgrund der hierin deutlich erniedrigten Dämpfung erheblich verbesserte optische Eigenschaften. An Luft mit UV bestrahlte Kunststoffe lieferten im Vergleich hierzu Wellenleiter mit weniger guten optischen Eigenschaften.

In einer weiteren bevorzugten Ausgestaltung sind erfindungsgemäße Vorrichtungen dadurch erhältlich, dass nach der partiellen Bestrahlung der Oberfläche mit ultraviolettem Licht der Kunststoff einer wässrigen Lösung aus Halogenen, bevorzugt Brom, über einen Zeitraum zwischen 1 und 24 Stunden ausgesetzt wird. Da bei den meisten photochemischen Reaktionen ungesättigte Bindungen als Zwischen- oder Endprodukt entstehen, eignen sich elektrophile Additionsreaktionen von Halogenen insbesondere für die weitere Passivierung und Stabilisierung des photochemisch veränderten Materials im Hinblick auf den Einsatz als Wellenleiter. Im bestrahlten Kunststoff hat die Addition von Halogenen, bevorzugt Brom, zur Folge, dass sich dessen Glasübergangstemperatur erhöht, wodurch sowohl der Brechungsindex als auch die thermische Stabilität zunehmen.

Die so mit Wellenleitern versehenen Kunststoffplättchen werden anschließend gemäß der DE 101 12 109 A1 als Zellkultursubstrat eingesetzt. Erste Untersuchungen zur Immobilisierung verschiedener Zelltypen auf Polymeroberflächen (PMMA, Polystyrol) wurden erfolgreich durchgeführt. Strukturierte Zelladhäsion wurde bereits mit verschiedenen Zelllinien und mit primären Rattenhepatozyten erreicht. Hierdurch wird eine Strukturgenerierung bis in den subzellulare Größenbereich, d.h. unterhalb von 1 µm möglich, die sich biochemisch exakt dem jeweiligen Anwendungsgebiet anpassen lassen. Eine erfindungsgemäße Vorrichtung kann somit der Charakterisierung von prokaryontischen Zellen wie z. B. Blaualgen, Bakterien oder Viren oder von eukaryontischen Zellen dienen.

Wesentlich an der vorliegenden Erfindung ist, dass die in den Kunststoff mittels Bestrahlung mit ionisierender Strahlung eingebrachten Wellenleiter dazu dienen, Zellen bzw. Zellkulturen auf Teilen bzw. auf dem gesamten Wellenleiter oder einer hierauf aufgebrachten dünnen Schicht aus Kunststoff zu immobilisieren. Die Wechselwirkung zwischen den auf den Wellenleitern bzw. der Zwischenschicht immobilisierten Zellen mit dem evaneszenten Feldanteil der im Welllenleiter geführten Welle kann das spektrale Transmissionsverhalten oder den effektiven Brechungsindex des Wellenleiters ändern. Eine Änderung des spektralen Transmissionsverhaltens lässt sich direkt mit einem Photodetektor oder Spektrometer beobachten. Für den Nachweis einer Änderung der effektiven Brechzahl können interferometrische oder resonante Wellenleiteranordnungen herangezogen werden. Die in-vivo Charakterisierung der Zellen ermöglicht es zum Beispiel die Reaktion gegenüber einer Exposition von potentiellen pharmazeutischen Wirkstoffen, Toxinen oder anderen umweltrelevanten Stoffen nicht-invasiv zu erfassen.

Dadurch findet eine erfindungsgemäße Vorrichtung Verwendung als Biosensor oder als Bestandteil eines Biosensors. In einer weiteren Ausgestaltung der erfindungsgemäßen Vorrichtung wird der Sensor in eine optische Bank, die z. B. mit dem LIGA-Verfahren hergestellt wurde, integriert, um auf diese Weise einen kompakten Biosensor zu bilden.

In einer weiteren Ausgestaltung der erfindungsgemäßen Vorrichtung wird im Kunststoff ein Wellenleitertyp hergestellt, der Vertiefungen, die durch partielle Bestrahlung mit ionisierender Strahlung für das Anlegen der Zellkultur bestimmt sind, enthält, die entweder einzeln eingebracht oder zu Kanälen oder ganzen Kanalsystemen ausgestaltet sind, vorzugsweise mit einer Abdeckung versehen sind und sich als Zellkulturkammer für ein geschlossenes Zellkultursystem zur kontinuierlichen Versorgung verschiedenster oder gleicher Zellen zum Beispiel mit flüssigen Nährmedien oder Wachstumsfaktoren, Gasen usw. einsetzen lassen.

In dieser weiteren Ausgestaltung löst die vorliegende Erfindung die Aufgabe, eine zur Aufnahme wenigstens einer Zellkultur dienenden Zellkulturkammer für ein geschlossenes oder offenes Zellkultursystem bereit zu stellen, wobei eine kontinuierliche Versorgung insbesondere der Zellen mit Substanzen wie flüssigem Nährmedium, Wachstumsfaktoren oder Gasen in der Zellkulturkammer gewährleistet ist, ohne dass die Zellen ihrer gewohnten Umgebung entnommen werden müssen und gleichzeitig eine permanente Beobachtung der Zellkulturen ohne Unterbrechung der Zu- oder Ableitung der Substanzen möglich ist.

Eine erfindungsgemäße Zellkulturkammer für ein geschlossenes Zellkultursystem zur kontinuierlichen Versorgung unterschiedlicher Zellen mit flüssigen Nährmedien, Wachstumsfaktoren, Gasen und dergleichen umfasst eine Vertiefung zur Aufnahme wenigstens einer Zellkultur, die eine Anzahl von Kanälen für Flüssigkeitszufuhr, Begasung und Lichtwellenleiter aufweist und einen Zellkulturkammerdeckel, der an der Oberseite der Anordnung angebracht ist und durch den im geschlossenen Zustand die in der Zellkulturkammer ausgesäte Zellkultur aseptisch und gasdicht verschlossen ist.

In einer bevorzugten Ausgestaltung weist eine erfindungsgemäße Zellkulturkammer auf ihrer Oberseite eine Abschlussplatte mit einem lichtdurchlässigen Bereich für die visuelle mikroskopische Überwachung (Auge, Kamera) des Inneren der Zellkulturkammer auf. Die Beleuchtung erfolgt vorzugsweise durch einen entsprechend ausgestalteten Lichtwellenleiter.

Eine weitere bevorzugte Weiterbildung der Erfindung besteht darin, dass durch eine geeignete Anordnung der Zellkulturkammer und der Kanäle, eine konstante, kontinuierliche Begasung durch die entsprechend zugeordneten Kanäle hindurch mit frei wählbaren Konzentrationen unterschiedlichster Gase ermöglicht ist. Dies hat insbesondere den Vorteil, dass eine Beobachtung der Zellkultur im Inneren der Zellkulturkammer ohne Unterbrechung der Begasung erfolgen kann. Schließlich kann, falls keine zentrale Heizung der Apparatur erfolgt, eine Heizung für die Zellkulturkammer auf der Unterseite angebracht werden.
In diesen Ausgestaltungen lässt sich eine erfindungsgemäße Vorrichtung als Bioreaktor oder als Bestandteil eines Bioreaktors einsetzen.

Eine erfindungsgemäße Vorrichtung weist folgende Vorteile auf:
- Sie erlaubt die nicht-invasive Charakterisierung der aufgebrachten Zellen. Zur Charakterisierung sind weder Elektroden noch Fluoreszenzmarker in der Zelle erforderlich.
- Aufbau und Funktionsweise erlauben einen geringen Verbrauch an Testsubstanzen. Die Wirkstoffe werden dadurch gezielt an den Zellen des gewünschten Organs getestet. Hierdurch lassen sich beispielsweise Tierversuche einsparen.
- Ein Einsatz von genmanipulierten Zellen ist einfach möglich, was geringere Sicherheitsanforderungen nach Gentechniksicherheitsverordnung nach sich zieht.
- Die einfache Miniaturisierung bewirkt einen äußerst geringen Bedarf an Zellen. Hierdurch wird die in-vivo Charakterisierung eines Zellverbands von weniger als 100 Zellen möglich. Dies erlaubt den Einsatz wertvoller Zellen (humaner Ursprung, Biopsien usw.) sowie von speziellen Zelllinien und Tumorzellen.
- Durch optische Signalgewinnung sind keine Schutzmaßnahmen bezüglich elektromagnetischer Verträglichkeit notwendig.
- Die Vorrichtung stellt ein kostengünstiges Produkt dar, das auch als Einmalprodukt verwendet werden kann, indem nur das Plättchen aus Kunststoff, auf dem die Zellen aufgewachsen sind, nach Gebrauch ausgetauscht wird.

Die Erfindung wird im Folgenden anhand von Ausführungsbeispielen näher erläutert.

Erfindungsgemäße monomodige Wellenleiterstrukturen wurden auf Plättchen (20 mm x 20 mm x 1 mm) aus Polymethylmethacrylat (PMMA) hergestellt. Die Bestrahlung erfolgte unter Vakuum oder unter Luft und einer Bestrahlungsdosis von 12.96 J/cm².

Ein Teil der Plättchen aus PMMA wurde bei einer Wellenlänge von 240 nm mit einer Bestrahlungsdosis von 4.32 J/cm² bestrahlt und anschließend über eine Zeit von 5 Stunden bei Raumtemperatur einer 0,1 % wässrigen Brom-Lösung (Br₂/H₂O) ausgesetzt.

Anstelle von PMMA wurden alternativ auch Plättchen aus Polystyrol oder Polycarbonat eingesetzt.

Auf diesen Plättchen wurden gerade Wellenleiter unterschiedlicher Länge sowie Y-förmige Verzweigungen (Y-Verzweiger) mit verschiedenen Öffnungswinkeln hergestellt. Diese Wellenleiter stellen die Basiskomponenten für interferometrische Sensoren dar. Die im Folgenden genannten Ausführungsformen können sowohl als planare Wellenleiter als auch als geprägte Wellenleiter in Form von Graben und Rippen ausgeführt sein:
- Mach-Zehnder-Interferometer (MZI): Ein Arm des MZI ist mit Zellen bewachsen. Diese Anordnung kann auch kaskadiert werden, d. h. mehrere MZI lassen sich zu einem Sensor zusammenfassen.
- Ring-Resonator: Der Ring ist komplett oder teilweise mit Zellen bewachsen. Es lassen sich auch mehrere Ringe zu einem Array kaskadieren. Die Ringe können auch als runde Scheiben (Disks) ausgebildet werden und weisen dieselbe Größe wie eine Zelle auf.
- Array von Wellenleitern: Durch die Anordnung der Zellen lässt sich hiermit eine ortsaufgelöste Selektivität erzeugen.
- Multimode-Interferenz-Koppler (MMI-Koppler): Im Multimodebereich können an bestimmten Stellen Zellen aufwachsen, wodurch sich am Ausgang des Kopplers je nach den Eigenschaften der Zelle in Bezug auf eine Änderung ihres Brechungsindex unterschiedliche Intensitätsverteilungen ergeben. MMI-Bauelemente können in verschiedene Ausführungsformen vorkommen wie z.B. 1 x 4, 2 x 2, 1 x 8, usw.
- Richtkoppler: Ein Arm ist mit Zellen bewachsen, der andere frei.
- Y-Verzweiger: Ein Arm des symmetrischen Y-Verzweigers wird mit Zellen bewachsen. Je nach Änderung des Brechungsindex bzw. des Maßes der Absorption in der Zelle ergibt sich eine unterschiedliche Dämpfung in den beiden Armen des Y-Verzweigers.

Auf die so modifizierten Kunststoff-Plättchen wurden anschließend Zellen aufgebracht, die aus folgenden Zellkulturen ausgewählt wurden:
- Hepatocyten (HepG2, menschliche Lebertumor-Zelllinie),
- Fibroblasten (L929, Zelllinie von Mäusen),
- weitere Zelllinien (Nr. 1-5 sind Fisch-Zelllinien und eignen sich für die Umweltanalytik; Nr. 6-9 lassen sich für das Drug-Screening einsetzen):

| Nr. | Bezeichnung | Quelle | |
|---|---|---|---|
| 1 | BF-2 | Bluegill Sunfish | Muskel |
| 2 | EPC | Karpfen | Haut |
| 3 | FHM | Dickkopfelritze | Haut |
| 4 | GSF | Goldfisch | Schuppe |
| 5 | RTG-2 | Regenbogenforelle | Gonade |
| 6 | HeLa | human | Krebszellen |
| 7 | Vero | afrikanische Meerkatze | Niere |
| 8 | HaCat | human | Keratinocyten |
| 9 | HMEC-1 | human | mikrovasc. En-dothel |

### Beispiel Bioreaktor:

Verschiedene Verfahren zur Prozessierung von Kunststoffmassen werden zur Herstellung von Lichtwellenleitern und zur Steuerung der Zelladhäsion eingesetzt. Zum Beispiel werden die Lichtwellenleiter an der Oberfläche eines Halbzeugs aus einem thermoplastischen Kunststoff erzeugt und dieses dann z. B. durch Heißprägen, -ziehen oder -blasen in ein dreidimensional strukturiertes Zellkultursubstrat umgeformt, das das Kernstück des Bioreaktors darstellt.

Das so hergestellte Zellkultursubstrat weist eine bestimmte Mikroarchitektur auf, z. B. eine definierte Geometrie eines Organmodells mit homo- und heterotypischen Zell-/Zell- und Zell-/Substrat-Wechselwirkungen sowie einer Flussgeometrie des Versorgungsmediums, insbesondere Nährstoff- und Sauerstoff-Gradienten. Das so hergestellte in-vitro Modell besitzt eine große Ähnlichkeit zur in-vivo Situation und eignet sich daher besonders für vergleichende Studien im Bereich Wirkstoffsuche und Umwelt-Überwachung (Monitoring). Die dreidimensionale Zellkultur im Bioreaktor ermöglicht eine automatisierbare und zerstörungsfreie Charakterisierung von intrazellulären Vorgängen und von Prozessen in der Zellmembran in Echtzeit bereits mit den im Substrat eingebrachten Wellenleitern. Alternativ lassen sich hierfür auch aufwändigere mikroskopische Verfahren wie z. B. Laserscanner-Mikroskopie einsetzen.

## Patentansprüche

1. Vorrichtung zur in-vivo Charakterisierung von Zellen aus einer Zellkultur, enthaltend
- eine Lichtquelle zur Erzeugung eines Anregungslichts,
- ein erstes Koppelelement zum Einkoppeln des Anregungslichts in
- mindestens einen Lichtwellenleiter, der in eine Oberfläche eines Kunststoffs eingebracht ist,
- ein zweites Koppelelement zum Auskoppeln des in mindestens einem der Lichtwellenleiter modifizierten Anregungslichts aus dem mindestens einen Lichtwellenleiter
- zur Beaufschlagung eines lichtsensitiven Detektor zum Nachweis des in mindestens einem Lichtwellenleiter modifizierten Anregungslichts,
erhältlich durch partielle Bestrahlung der Oberfläche des Kunststoffs mit ionisierender Strahlung, wodurch Veränderungen in den bestrahlten Bereichen des Kunststoffs hervorgerufen werden, die **dadurch** sowohl als Lichtwellenleiter als auch für das Anlegen der Zellkultur einsetzbar sind.

2. Vorrichtung nach Anspruch 1, **dadurch gekennzeichnet, dass** die Vorrichtung durch partielle Bestrahlung der Oberfläche des Kunststoffs mit ionisierender Strahlung unter Sauerstoffausschluss erhältlich ist.

3. Vorrichtung nach Anspruch 1 oder 2, **dadurch gekennzeichnet, dass** die Vorrichtung durch partielle Bestrahlung der Oberfläche des Kunststoffs mit ionisierender Strahlung und anschließender Behandlung der Oberfläche des Kunststoffs mit Halogen erhältlich ist.

4. Vorrichtung nach einem der Ansprüche 1 bis 3, **dadurch gekennzeichnet, dass** Homo- oder Copolymere von Polymethylmethacrylat, Polycarbonat oder Polystyrol als Kunststoff dienen.

5. Vorrichtung nach einem der Ansprüche 1 bis 4, **dadurch gekennzeichnet, dass** auf die Oberfläche des Kunststoffs zusätzlich eine Schicht aus demselben oder einem anderen Kunststoff aufgebracht ist, die nach partieller Bestrahlung mit ionisierender Strahlung für das Anlegen der Zellkultur einsetzbar ist.

6. Vorrichtung nach Anspruch 5, **dadurch gekennzeichnet, dass** die Dicke der Schicht zwischen 10 nm und 1 µm beträgt.

7. Vorrichtung nach Anspruch 5 oder 6, **dadurch gekennzeichnet, dass** die zusätzliche Schicht auf der Oberfläche des Kunststoffs derart aufgebracht und bestrahlt ist, dass Bereiche auf dem mindestens einen Lichtwellenleiter frei von der Zellkultur sind.

8. Vorrichtung nach einem der Ansprüche 5 bis 7, **dadurch gekennzeichnet, dass** sich mindestens einer der Lichtwellenleiter auf der Oberfläche in mindestens zwei Äste teilt, wobei Bereiche auf mindestens einem Ast frei von der Zellkultur sind.

9. Vorrichtung nach einem der Ansprüche 1 bis 8, **dadurch gekennzeichnet, dass** in die Oberfläche mindestens eine Vertiefung eingebracht wird, die nach partieller Bestrahlung mit ionisierender Strahlung für das Anlegen der Zellkultur einsetzbar ist.

10. Vorrichtung nach Anspruch 9, **dadurch gekennzeichnet, dass** sich mindestens einer der Lichtwellenleiter auf der Oberfläche in mindestens zwei Äste teilt, wobei das Licht aus mindestens einem Ast durch die in der Vertiefung angelegte Zellkultur geführt und hierbei modifiziert wird.

11. Vorrichtung nach Anspruch 9 oder 10, **dadurch gekennzeichnet, dass** die in die Oberfläche eingebrachten Vertiefungen mindestens einen Kanal darstellen.

12. Vorrichtung nach Anspruch 11, **dadurch gekennzeichnet, dass** die Oberfläche mindestens einen Kanal für die Zu- oder Ableitung von Flüssigkeiten oder Gasen zu oder von der dort angelegten Zellkultur aufweist.

13. Vorrichtung nach Anspruch 12, **dadurch gekennzeichnet, dass** auf die Oberfläche eine flüssigkeits- und gasdichte Abdeckung aufgebracht ist.

14. Verwendung der Vorrichtung nach einem der Ansprüche 1 bis 13 zur Charakterisierung von Zellen, als Biosensor oder als Bestandteil eines Biosensors.

15. Verwendung der Vorrichtung nach einem der Ansprüche 9 bis 13 als Bioreaktor oder als Bestandteil eines Bioreaktors.
